# DEMANDE DE BREVET EUROPEEN

(11) **EP 0 547 999 A2**
(43) Date de publication de la demande: **23.06.1993**
(21) Numéro de dépôt: 92500168.7
(22) Date de dépôt: 18.12.1992
(51) Int. Cl.: G09B 25/02, G01N 29/04

(54) **Méthode propre à implanter des défauts dans un composant métallique**

(30) Priorité: 18.12.1991 ES 9102811
(71) Demandeur: EQUIPOS NUCLEARES, S.A., E-39600 Maliano (Cantabria) (ES)
(72) Inventeur: Diez Aja, Juan Antonio, E-39600 Maliano (Cantabria) (ES)
(74) Mandataire: Urizar Anasagasti, Jesus Maria

(57) **Abrégé**

Méthode propre à implanter des défauts dans un composant métallique, sous une position quelconque prédéterminée dans le volume du matériel, de n'importe quelle forme géométrique, pouvant être préparée pour son utilisation en tant que modèle en vue de la mise au point et de la qualification d'opérateurs et de techniques d'essai non destructifs. Cette méthode se caractérise en ce que l'implantation se fait directement sur l'élément modèle, en ménageant, pour cela, des creusements qui sont comblés, après l'implantation des défauts, à l'aide d'un processus de soudure.

## Description

La présente invention porte sur une méthode en vue de construire un modèle métallique contenant des défauts du type, taille et localisation établis au préalable.

Ces modèles métalliques sont employés pour l'entraînement et la qualification du personnel et des techniques d'inspection par des essais non destructifs. La forme géométrique des modèles est similaire à celle étant la plus représentative de la construction métallique à être inspectée. Leur poids peut aller de quelques kilos jusqu'à plusieurs dizaines de tonnes, le matériel employé étant fabriqué et traité thermiquement d'une façon similaire à celle représentée.

Les composants métalliques peuvent présenter, au cours de leurs processus de fabrication et/ou lors de leur vie de fonctionnement, plusieurs sortes différentes de défauts (des défauts de continuité du matériel) susceptibles d'être représentés par quelques- uns des types ci-dessous:
- Défaut fin, consistant dans une crevasse plate à de très fins bords.
- Gros défaut, dans lequel on peut remarquer une crevasse brisée à de bords opposés.

Défaut volumétrique, consistant en un creux dans le métal.

La nécessité de pouvoir détecter tout défaut connu à l'aide des ultra-sons a fait l'objet d'une règle- mentation, cela étant devenu une règle à respecter impérativement par les diverses sociétés nationales et internationales, notamment lorsqu'il s'agit d'installations ou de centrales nucléaires, auquel cas l'inspection est réalisée, soit lors de leur installation, soit au cours de l'exercice de la cantrale. Il a été stipulé qu'il faudrait pouvoir simuler le vaisseau du réacteur, après avoir installé au préalable une série de défauts simulés; ainsi, en employant des restes d'un réacteur nucléaire, l'entreprise titulaire de ce brévet a commencé l'implantation de divers défauts sur le vaisseau de celui-là. Ensuite, le programme PISC, dont la promotion a été faite par la CEE, envisageait, lui aussi, l'implantation de défauts dans des modèles réels; d'après les grandes lignes de ce programme, on a réalisé une série de modèles répandus partout dans le monde au cours d'une période approximative de deux ans, lesquels sonts stationnés dans chaque centre d'anayse, celui-ci étant tenu de dresser un rapport des défauts décelés; à la fin du parcours, on étudie les analyses réalisées par les différents centres en vue de connaître le degré de réussite ou d'échec de leurs techniciens. On a pu constater, comme conséquence secondaire, que ce système permettait également d'évaluer les divers systèmes d'analyse employés et de déterminer, ainsi, la validité de chacun d'entre eux.

Ainsi donc, tout le monde est d'accord sur le fait que, pour bien étudier un défaut, il faut employer des modèles réels contenant des défauts. La technique employée, jusqu'à présent, pour l'implantation de ces défauts a été développée en partie, tel que nous l'avons déjà indiqué, par la société demandeuse de ce brévet, et en partie aussi par d'autres fabricants, européens notamment, qui ont commencé à fabriquer, à son temps, des modèles réels.

D'après l'une des techniques employées jusqu'à présent, les crevasses étaient obtenues en opposant deux matériels et en soudant autour du raccord. En faisant cette soudure, le matériel se contracte; or, étant donné le manque de pénétration du matériel, il reste une crevasse dont la forme peut être variée en fonction de l'aspect des pièces opposées. Dans cette technique, il est très important que le bord de la crevasse en section transversale soit très fin, étant donné que l'on obtient une plus ou moins grande ouverture en fonction de la rugosité existante des faces opposées.

Les crevasses de fatigue sont extrêmement fines, leur bord en particulier, où elles présentent généralement une dimension de moins de 0,2 mm. Dans le but d'obtenir un défaut de ce genre, on procédait à préparer une éprouvette sur laquelle on effectuait une entaille que l'on soumettait à un effort de fatigue contrôlé, avec quoi cette entaille progresse, la crevasse avançant jusqu'atteindre un point désiré. Avec ce progrès, on obtient un défaut de cotes déterminées, en coupant l'éprouvette avec les dimensions adéquates.

Ainsi donc, il fallait, pour n'importe laquelle de ces deux méthodes, une éprouvette consistant en une pièce en cube ou en arbre, dans laquelle on parvenait l'effetdésiré, soit à travers la méthode qui oppose deux pièces entre-elles, soit en effectuant sur celle-là un effort de fatigue contrôlé. Enfin, il fallait réaliser un procédé d'implantation de cette éprouvette dans la pièce modèle qui devrait définitivement inclure le défaut.

Afin de réaliser l'implantation de l'éprouvette dans le modèle, on effectue sur celui-ci un creusement plus grand que l'éprouvette, dans le but d'assurer l'accès à celle-ci à partir de toutes les directions; ensuite, on place l'éprouvette dans la position désirée et, finalement, on ferme parfaitement tout le volume restant par soudure. Ce processus ultérieur de soudure doit être réalisé très soigneusement afin d'éviter la formation de défauts postérieurs résultant du procédé lui-même. Pour réaliser l'implantation, il faut souder de part et d'autre de l'éprouvette en même temps, dons le but d'éviter des tensions et des déformations, ce qui est à l'origine d'éventuels déplacements ou rotations de l'éprouvette, cela pouvant occasionner le déplacement du défaut. Il existe également des contractions susceptibles d'entraîner des déplacements en longueur de l'éprouvette, en effectuant le procédé de soudure de l'intérieur vers l'extérieur. En fin de compte, il existe une très forte incertitude propre au procédé d'implantation, en ce qui concerne l'éventuelle localisation définitive des défauts, ainsi que la création d'éventuels défauts additionnels; c'est pourquoi cette phase du procédé d'implantation était fort critique.

La méthode que l'on décrit ici coupe dans la racine ces problèmes, car les défauts sont implantés directement sur l'élément modèle, dans un endroit prédéterminé. pour cela faire, on usine des creusements dans lesquels on crée le défaut directement, le creux résultant étant comblé plus tard par un procédé de soudure.

On pourra mieux comprendre l'objectif de la présente invention à l'aide de la description ci-dessous, réalisée sur la base d'un exemple pratique de réalisation d'un modèle contenant des modèles de divers types de défauts. Cette description est effectuée à l'aide des dessins ci-joints, où:
La figure 1 montre une vue schématisée d'un composant dans lequel on a implanté ces types de défauts.
Les figures 2 et 3 montrent une vue en coupe d'une méthode d'implantation d'un défaut fin.
Les figures 4, 5 et 6 représentent également une vue en coupe schématique de la méthode suivie dans l'implantation d'un défaut volumétrique.

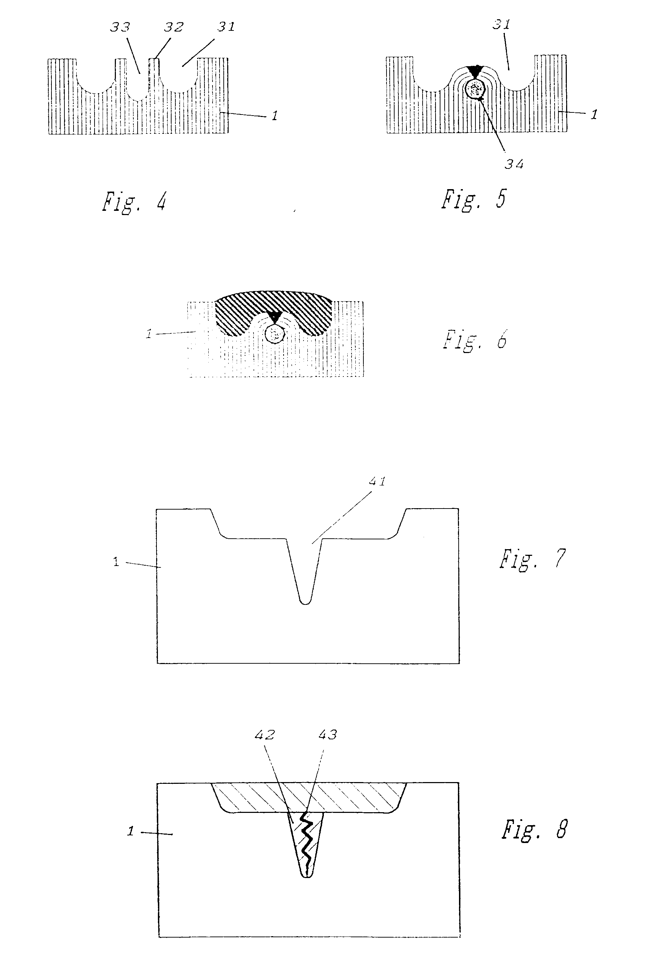

Dernièrement, les figures 7 et 8 représentent aussi une vue schématique de la méthode suivie pour implanter un gros défaut.

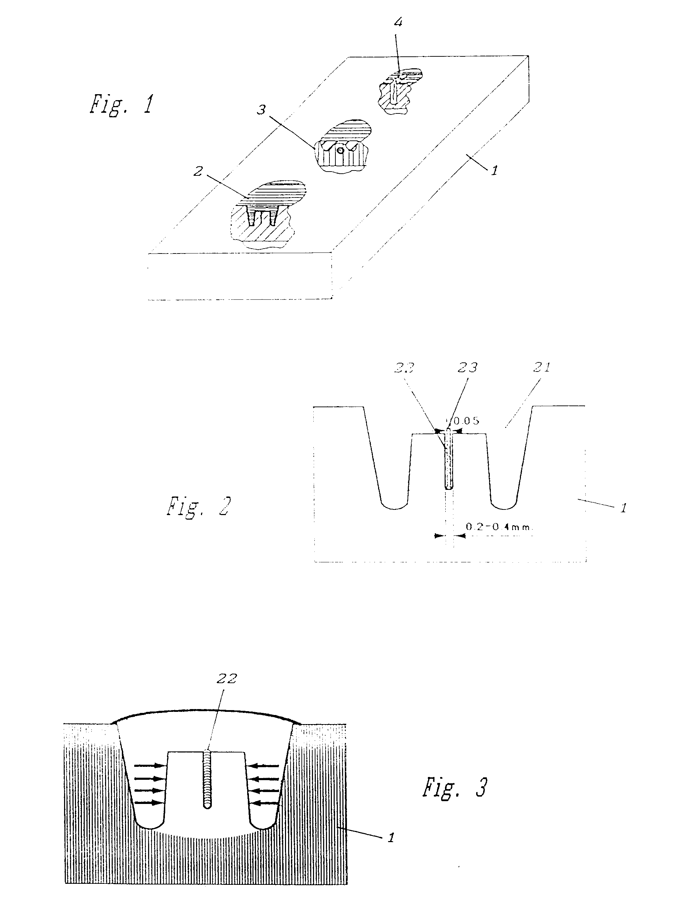

Les figures 2 et 3 indiquent les phases précédentes et postérieures à l'implantation d'un défaut fin (2) sur un modèle métallique (1). Tout d'abord, on prépare sur cet élément une arcasse (21) dans l'endroit et avec l'inclination voulus; lors d'une opération postérieure, on fait une entaille (22) d'électro-érosion, en fonction de la localisation, la forme et les dimensions que l'on recherche pour le défaut. La largeur au fond doit être au plus réduite possible (0,2 - 0,4 mm). On introduit dans l'entaille (22) un élément réfractaire ou un recouvrement céramique (23) au plus mince possible (moins de 0,05 si possible), de telle sorte que le procédé de forge que l'on décrit par la suite n'entraîne pas de soudure entre les deux faces de l'entaille, créant ainsi une très fine crevasse, en particulier sur le sommet inférieur de celle-là. L'élément réfractaire employé peut être, par exemple, de la farine, de la peinture au zirconium ou de la mica.

Le volume en matériel métallique contenu par l'entaille et ses environs se chauffe à la température de forge ( 1100° C pour les aciers), ce qui est à l'origine d'une déformation plastique par impact/compression. En conséquence, la largeur de l'entaille (22) est réduite à moins de 0,05 mm si possible, ce qui occasionne un défaut avec une réponse aux ultra-sons similaire à celle d'une crevasse fine réelle. L'arcasse préparée au début est comblée par un procédé de soudure à arc conventionnel, avec le respect des précautions indispensables en vue d'éviter des déformations. Il peut arriver que, lors de ce procédé de soudure, l'entaille (22) ait tendance à s'ouvrir par l'extérieur. Néanmoins, cela ne constitue aucun inconvénient, car les crevasses de fatigue sont généralement de ce type, avec un important écart vers l'extérieur et extrêmement fines au niveau de leur bord. Ce qui intéresse dans ce cas est de pouvoir détecter, par les ultra-sons, la profondeur de cette crevasse, sur la base de l'extrémité inférieure de celle-là, qui doit être, tel qu'il a été indiqué, de moins de 0,22 mm.

On décrit par la suite, à l'aide des figures 4, 5 et 6, la méthode de production d'un défaut volumétrique (3). On fait par usinage une arcasse (31) présentant deux fines lèvres (32), sur le modèle (1), opposeés entre elles. Dans le creux central (33) existant entre celles-là, on introduit un solide (34) avec la forme et la longueur désirées; ensuite, et sur celui-ci, on rabat les lèvres (32) du matériel de base tel qu'il apparaît sur la figure 5, et puis, à l'aide de la soudure TIG à faible apport thermique, on scelle la zone de jonction des lèvres et on comble toute la zone de l'arcasse, tel qu'il a été représenté finalement sur la figure 6.

Enfin, à l'aide des figures 7 et 8, on décrit le procédé de production d'une grosse crevasse (4) sur un modèle (1). Le procédé est aussi commencé par la prépartion d'une arcasse (41) adéquatement repérée et avec les dimensions précises, de telle sorte que ce soit exactement dans l'axe central de cette arcasse (41) que l'on aille implanter le défaut en soi. Par soudure à arc TIG et au moyen de l'addition du matériel d'apport (42) similaire au matériel de base utilisé, sauf dans la teneur en soufre, qui doit être de 0,3% environ, et en déposant des couches successives de minces cordons (42), on obtient dans chaque couche une crevasse en longueur au centre de chaque cordon. Les dépôts successifs des cordons sont à l'origine d'une crevasse continue et brisée (43), dont la hauteur est donnée par la profondeur de l'arcasse, alors que sa longueur est obtenue en effectuant une crevasse plus longue qu'il ne faut et, ultérieurement, en ramendant les deux extrémités.

## Revendications

1.- Méthode propre à implanter des défauts dans un composant métallique, caractérisé en ce que, dans lui-même, tout défaut, soit fin, soit gros ou volumétrique, est créé directement dans l'élément modèle, dans un endroit déterminé, en faisant, pour cela, et par usinage, une arcasse à la base de laquelle est créé le défaut recherché, celle-là étant ensuite comblée par un procédé de soudure grâce à l'addition du matériel d'apport.

2.- Méthode, conformément à la revendication précédente, caractérisé en ce que, pour la production d'un défaut fin, on effectue, au fond de l'arcasse réalisée dans l'élément modèle, une entaille d'électroérosion en fonction de la localisation, la forme et des dimensions désirées pour le défaut, en plaçant du matériel réfractaire dans celle-là ou un revêtement céramique pas très épais; méthode suivie ensuite d'un procédé de forge et d'une déformation plastique par impact/compression du matériel, dans le but de réduire la crevasse réalisée, sans pour autant la fermer, cela étant comblé finalement par un procédé de soudure à arc conventionnel.

3.- Méthode, conformément à la première revendication, caractérisé en ce que, lors de la production d'un défaut du type volumétrique, on fait un usinage en vue de préparer una arcasse à deux fines lèvres, on introduit dans le creux existant entre celles-ci un solide ayant la forme et la longueurs désirées à cette fin, on rabat ensuite les lèvres du matériel sur celui-là et on scelle par soudure la zone d'union des lèvres, procédant dernièrement à combler l'arcasse.

4.- Méthode, conformément à la première revendication, caractérisé en ce que, lors du procédé de production d'une grosse crevasse, on fait une arcasse adéquatement repérée et avec les dimensions précises et, sur l'axe de celle-là, on procède à réaliser une soudure par arc moyennant l'addition du matériel d'apport, en déposant de successives couches de minces cordons en vue d'obtenir pour chaque couche une crevasse longitudinale au centre de chaque cordon, les successifs cordons étant à l'origine d'une crevasse continue brisée, dont la hauteur est déterminée par la profondeur de l'arcasse et dont la longueur est délimitée par l'ultérieur ramendement des deux extrémités.
